# FASCICULE DE BREVET EUROPEEN

(11) **EP 1 606 995 B1**
(45) Date de publication et mention de la délivrance du brevet: **06.01.2010**
(21) Numéro de dépôt: 05290884.5
(22) Date de dépôt: 21.04.2005
(51) Int. Cl.: A01K 41/00

(54) **Incubateur à oeufs**
Brutapparat
Egg incubator

(30) Priorité: 30.04.2004 FR 0404660
(43) Date de publication de la demande: 21.12.2005
(73) Titulaire: Société Zundel Maurice, 22640 Plénée Jugon (FR)
(72) Inventeur: Zundel, Maurice, 22130 Bourseul (FR)
(74) Mandataire: Maillet, Alain

(56) Documents cités:
- FR-A- 1 372 632
- FR-A- 2 728 761
- GB-A- 423 233

## Description

La présente invention concerne un incubateur à oeufs tels que des oeufs de volatiles.

Dans le domaine avicole, on connaît deux techniques pour mettre au monde des poussins à partir d'oeufs fécondés. Une première technique consiste à faire couver les oeufs fécondés par une poule dite poule couveuse du fait de sa capacité naturelle à effectuer la couvaison des oeufs. Cette première technique donne de bons résultats mais le rendement est insuffisant pour produire autant de poussins que nécessité par la production de masse. Une seconde technique consiste à introduire les oeufs fécondés disposés dans des chariots, dans une machine destinée à jouer le rôle de la poule couveuse en reconstituant les conditions de durée, d'humidité, de température et de ventilation de la couvaison. Cette machine est appelée couveuse ou incubateur. Un incubateur comporte généralement des serpentins de refroidissement et des ventilateurs prévus pour brasser l'air ambiant afin de maintenir dans l'enceinte une température et une hygrométrie correspondant à des conditions optimales d'incubation.

Or, dans un incubateur tel que décrit précédemment, on a pu constater après de nombreux essais que le nombre des oeufs morts à l'issue de l'incubation avoisinait les 10 à 12%. Ces résultats sont en outre obtenus uniquement lorsque l'incubateur est chargé dans des proportions inférieures ou égales au tiers de sa capacité et qu'une rotation des chariots présents dans l'incubateur est assurée toutes les semaines. Un tel rendement reste perfectible notamment en rapport avec la capacité de l'incubateur et n'offre pas une rentabilité suffisante. En outre, l'ouverture de l'incubateur lors des rotations provoque des manoeuvres supplémentaires coûteuses.

Le but de l'invention est donc de proposer un incubateur pouvant comporter un chargement complet de chariots, offrir un rendement important tout en maintenant à l'intérieur de l'enceinte des conditions d'incubation optimales.

A cet effet, la présente invention concerne un incubateur à oeufs incluant une enceinte comportant un air ambiant, lequel air est destiné à être mis en mouvement au moyen d'un dispositif de soufflerie. Selon l'invention, ledit dispositif de soufflerie est disposé à l'extérieur de l'enceinte, laquelle enceinte présente au moins un orifice d'entrée d'air relié à une sortie dudit dispositif de soufflerie.

L'enceinte d'incubation présente au moins un orifice d'entrée d'air au travers duquel de l'air mis en mouvement est introduit. Cet air mis en mouvement à l'extérieur présente l'avantage de pouvoir être introduit à un ou plusieurs endroits choisis pour offrir une meilleure ventilation tout en maintenant des conditions d'incubation optimales.

Selon un mode de réalisation particulier de l'invention, ledit orifice d'entrée d'air est aménagé sur un élément souffleur installé à l'intérieur de ladite enceinte.

La présence supplémentaire de l'élément souffleur permet de diriger, au sein même de l'enceinte, le flux d'air soufflé et donc de faciliter le brassage de l'air ambiant.

Selon de l'invention, ledit élément souffleur est mobile dans ladite enceinte. Une telle mobilité de l'élément souffleur facilite la répartition de l'air soufflé dans l'enceinte et favorise l'obtention d'une homogénéité de température au sein de celle-ci.

Selon une première variante de l'invention, ledit élément souffleur est mû par un moyen d'entraînement prévu pour lui permettre de réaliser une trajectoire rectiligne entre deux parois parallèles de ladite enceinte.

La trajectoire suivie par l'élément souffleur permet de répartir l'air soufflé sur une des dimensions de l'enceinte. En outre le mouvement de l'élément souffleur permet de créer des courants à l'origine d'une homogénéisation rapide de l'air ambiant.

Selon un mode de réalisation avantageux de la première variante de l'invention, ledit moyen d'entraînement est prévu pour permettre audit dispositif souffleur de réaliser une trajectoire rectiligne médiane entre deux parois parallèles de ladite enceinte

La trajectoire médiane suivie par l'élément souffleur permet de répartir l'air soufflé à partir d'une ligne médiane de l'enceinte sur toute la largeur de celle-ci et de manière sensiblement égale sur les deux côtés de l'enceinte séparés par la trajectoire du dispositif souffleur.

Ledit moyen d'entraînement pourra être réalisé de différentes manières, mais sera de préférence constitué par un vérin sans tige.

Selon une seconde variante de l'invention, ledit élément souffleur est mû par un moyen d'entraînement prévu pour lui permettre de réaliser une trajectoire circulaire à l'intérieure de ladite enceinte.

Une trajectoire circulaire permet également une bonne répartition de l'air dans l'enceinte et limite le volume des zones dans lesquelles les conditions d'incubation seront perturbées, laquelle limitation est obtenue grâce à un déplacement dans la largeur et la longueur de l'enceinte.

Selon un mode de réalisation avantageux de l'invention, ledit élément souffleur comprend une poutrelle creuse pourvue de rainures réalisées selon une direction longitudinale dans ladite poutrelle et prévues pour souffler de l'air provenant de la sortie dudit dispositif de soufflerie.

Les rainures réalisées dans l'élément souffleur permettent de souffler un rideau d'air sur toute la hauteur de l'enceinte.

Selon une autre caractéristique distincte et avantageuse du mode de réalisation avantageux précédent, au moins deux desdites rainures sont disposées dans un même plan.

Les rainures étant disposées dans un même plan, l'air est soufflé de manière identique des deux côtés de la poutrelle mobile.

Avantageusement, ledit élément souffleur comporte une première extrémité ouverte par des pans inclinés et une seconde extrémité fermée.

Une telle structure de l'élément souffleur permet d'orienter le flux d'air et de l'expulser hors de la poutrelle selon une direction sensiblement horizontale sur toute la hauteur des rainures pratiquées dans ladite poutrelle.

Dans un mode de réalisation préféré, ladite première extrémité dudit élément souffleur est reliée par chacun de ses pans inclinés à un tapis prévu pour clore ladite enceinte.

Les tapis recouvrent l'office d'entrée d'air à l'exception de la zone couverte par le dispositif souffleur ce qui permet, d'une part de limiter les pertes de chaleur et, d'autre part, de favoriser une homogénéisation de la température à l'intérieur de l'enceinte.

Selon un mode de réalisation préféré de l'invention, l'incubateur comporte en outre, disposé en amont du dispositif de soufflerie, un dispositif de traitement de l'air.

Le dispositif de traitement de l'air inséré en amont du dispositif de soufflerie permet la mise aux conditions d'incubation de l'air à insérer dans l'enceinte. Ainsi, l'air soufflé dans l'enceinte présente en continu des propriétés préalablement identifiées comme permettant d'obtenir des conditions optimales d'incubation.

Selon un autre mode de réalisation particulier de l'invention, l'enceinte est munie d'au moins un orifice de sortie d'air relié à une entrée du dispositif de soufflerie.

Un orifice de sortie d'air est prévu dans l'enceinte pour évacuer une partie de l'air de l'enceinte et le réinjecter par le dispositif de soufflerie de façon à créer un brassage d'air en circuit fermé.

Selon un autre mode réalisation particulier de l'invention, l'enceinte est munie d'au moins un orifice de sortie d'air relié à une entrée du dispositif de traitement de l'air.

L'orifice de sortie d'air prévu dans l'enceinte permet l'évacuation d'une partie de l'air de l'enceinte. Cet orifice est relié à une entrée du dispositif de traitement de l'air afin de traiter l'air de l'enceinte si celui-ci n'est pas aux conditions d'incubation prédéterminées avant de le réinjecter dans l'enceinte par le dispositif de soufflerie.

Selon un autre mode de réalisation particulier de l'invention, le dispositif de traitement de l'air comporte au moins une entrée d'air ouverte sur l'air extérieur.

Le dispositif de traitement de l'air comporte au moins une entrée d'air ouverte sur l'air extérieur si bien que l'air injecté dans l'enceinte peut être de l'air neuf mis aux conditions d'incubation.

Les caractéristiques de l'invention mentionnées ci-dessus ainsi que d'autres apparaîtront plus clairement à la lecture de la description suivante d'un exemple de réalisation, ladite description étant faite en relation avec les dessins joints, parmi lesquels :
la Fig. 1 représente une vue en perspective d'un incubateur;
la Fig. 2 représente une vue en coupe selon le plan A de la Fig. 1 d'un incubateur de l'état de la technique vide ;
la Fig. 3 représente une vue selon la direction B de la Fig. 1 d'un incubateur de l'état de la technique en fonctionnement ;
la Fig. 4 représente une vue en coupe selon le plan A de la Fig. 1 d'un incubateur selon l'invention vide ; et
la Fig. 5 représente une vue selon la direction B de la Fig. 1 d'un incubateur selon l'invention en fonctionnement.

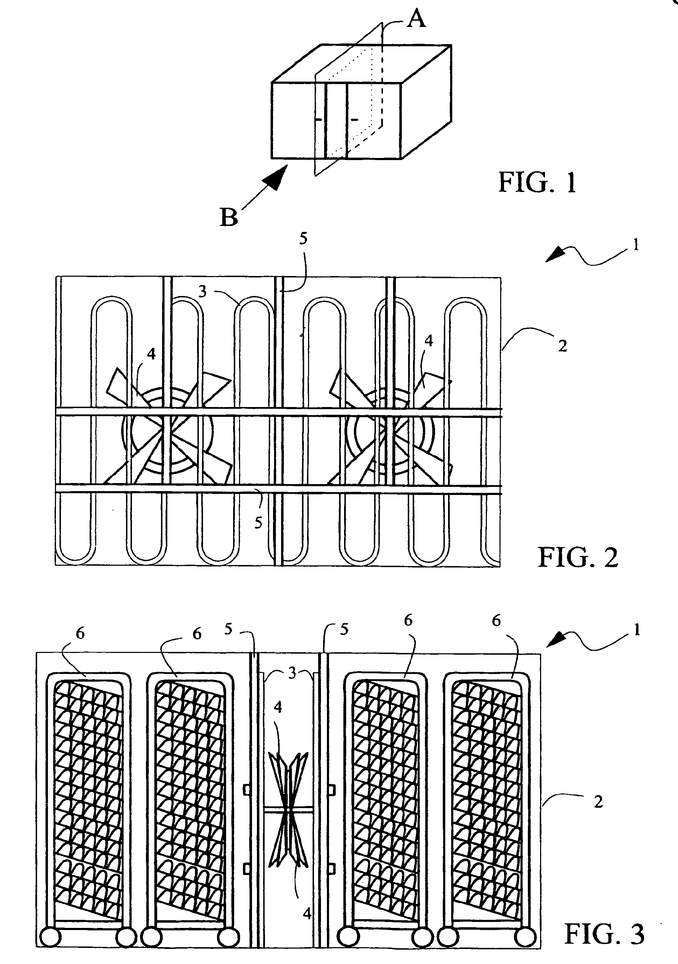

Un incubateur tel que couramment utilisé actuellement est représenté aux Figs. 1, 2 et 3. La Fig. 1 illustre à titre indicatif la forme générale d'un incubateur.

A la Fig. 2, on a représenté un incubateur 1 vide vu en coupe transversale médiane. Cet incubateur 1 est un ensemble constitué d'une enceinte 2 et d'une machinerie (non représentée) destinée à reproduire les conditions précitées de couvaison à l'intérieur de ladite enceinte 2. A l'intérieur de l'enceinte 2 sont installés des serpentins de refroidissement 3 et des ventilateurs 4 montés entre deux portiques de protection 5. Ces éléments associés sont prévus pour maintenir dans l'enceinte 2 une température et un brassage correspondant à des conditions optimales d'incubation. Ainsi, pour la poule, la température d'incubation doit se situer aux environs de 38°C de manière constante. La ventilation doit être régulière afin de permettre l'évacuation du dioxyde de carbone produit par les oeufs et une oxygénation suffisante des oeufs.

On a représenté à la Fig. 3 ce même incubateur 1 en fonctionnement. A l'intérieur de l'enceinte 2 et de part et d'autre des ventilateurs 4 en position médiane sont placés des chariots à oeufs 6. L'enceinte 2 est fermée et l'ensemble des éléments destinés à recréer les conditions d'incubation sont mis en marche. Les ventilateurs 4 sont activés et mettent en mouvement l'air ambiant de manière à fournir un air brassé aux oeufs des chariots à oeufs 6.

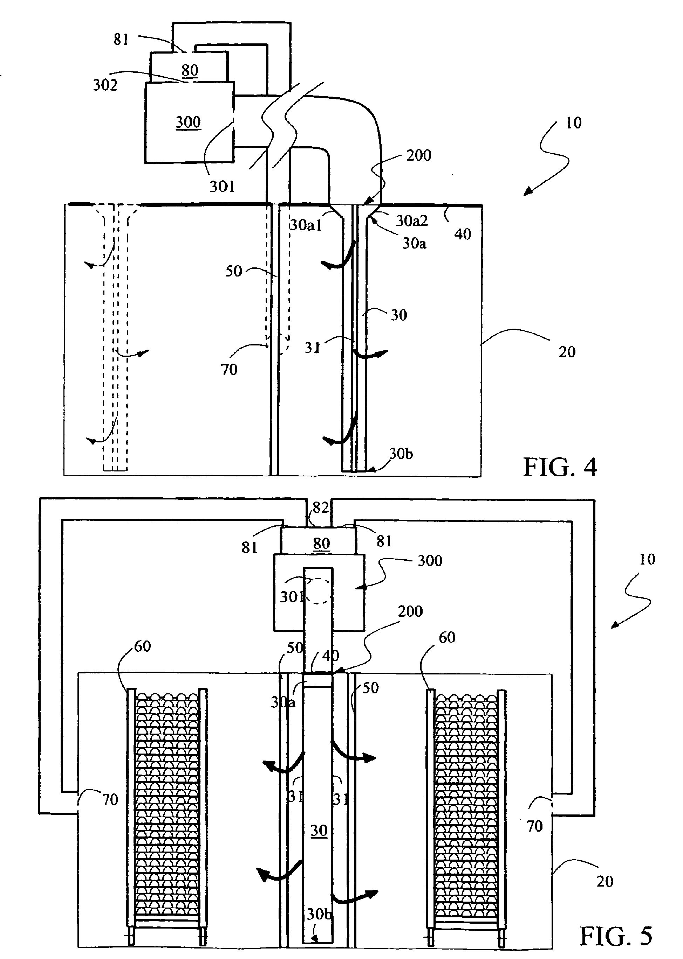

On a représenté un incubateur selon un mode de réalisation particulier de l'invention aux Figs. 4 et 5. Cet incubateur 10 comporte une enceinte 20 dans une zone médiane transversale de laquelle sont disposées des montants 50. Une ouverture 200 réalisée dans l'enceinte 20 de préférence sur une zone de largeur égale à la distance entre ces montants 50 et de longueur égale à la distance entre deux parois parallèles, est prévu entre les montants 50 par exemple au plafond de ladite enceinte 20. A l'extérieur de l'enceinte 20, de préférence à proximité de l'ouverture 200 est installé un dispositif de soufflerie 300. Ce dispositif de soufflerie 300 est prévu pour mettre en mouvement de l'air et le souffler par une de ses sorties 301 au travers de l'ouverture 200. Dans un mode de réalisation préféré mais non limitatif, le dispositif de soufflerie 300 est prolongé à l'intérieur de ladite enceinte 20 par un élément souffleur 30. L'élément souffleur 30 se présente de préférence sous la forme d'une poutrelle creuse de section parallélogramme rectangle ouvert longitudinalement de part en part par des rainures 31. Ces rainures 31 constituent dans ce mode de réalisation particulier de l'invention des orifices d'entrée d'air dans l'enceinte 20. Ces rainures 31 sont de préférence disposées dans un même plan, lequel plan est parallèle ou disposé selon un angle par rapport à au moins une paroi de l'enceinte 20. L'élément souffleur 30 comporte une première extrémité 30a montée dans l'ouverture 200 et fixée sur une paroi attenante à cette ouverture 200 et une seconde extrémité 30b fermée libre d'évoluer dans une zone située de préférence à proximité du sol. La première extrémité 30a comporte des pans 30a1, 30a2 inclinés de manière à former un cône d'entrée d'air en provenance du dispositif de soufflerie 300. Ces pans 30a1, 30a2 sont chacun fixés à un tapis 40 destiné à clore l'espace constitué par l'ouverture 200 non couvert par l'extrémité 30a. Un dispositif d'entraînement (non représenté) est en outre prévu pour permettre à l'élément souffleur 30 de se déplacer de manière rectiligne de préférence transversalement à ladite enceinte 20. Ce dispositif d'entraînement est par exemple un vérin sans tige. Dans un mode de réalisation avantageux de l'invention, le dispositif de soufflerie 300 est, soit fixé à l'extérieur de l'enceinte 20 et raccordé par un tuyau souple à l'ouverture 200, le tuyau souple étant prévu pour suivre l'élément souffleur 30 dans ses déplacements, soit monté mobile à l'extérieur de l'enceinte 20 et raccordée par un tuyau de nature quelconque à l'ouverture 200, l'ensemble formé par le tuyau et le dispositif de soufflerie étant alors prévu pour suivre l'élément souffleur 30 dans ses déplacements.

L'air mis en mouvement par le dispositif de soufflerie 300 peut avoir plusieurs sources. Le source préférée est l'enceinte 20. En effet, dans un mode de réalisation préféré, l'air mis en mouvement par le dispositif de soufflerie 300 est prélevé au niveau d'au moins une sortie d'air 70 prévue dans une paroi de l'enceinte. Cette ou ces sorties d'air 70 sont de préférence situées dans au moins une paroi située dans le prolongement du flux d'air soufflé par l'élément souffleur 30. Une autre source d'air peut également être l'air ambiant extérieur.

Indépendamment de son origine, l'air prélevé subit, dans un mode avantageux de l'invention, un traitement au travers d'un dispositif de traitement de l'air 80 placé en amont du dispositif de soufflerie 300. Ce dispositif de traitement de l'air 80 est destiné à agir sur l'air prélevé afin de le mettre aux conditions d'incubation souhaitées, c'est-à-dire aux conditions de température et d'hygrométrie souhaitées.

Dans un mode réalisation préféré de l'invention, l'air prélevé dans l'enceinte 20 par les sorties d'air 70 est amené jusqu'à au moins une entrée 81 du dispositif de traitement de l'air 80. Dans le dispositif de traitement de l'air 80, des mesures de température et d'hygrométrie sont effectuées afin de réaliser si besoin un traitement de l'air ainsi prélevé. L'air aux conditions d'incubation est injecté par une entrée 302 dans le dispositif de soufflerie 300.

Une entrée d'air 82 est prévue dans le dispositif de traitement de l'air 80 afin de traiter éventuellement de l'air provenant de l'extérieur avant introduction de cet air dans le dispositif de soufflerie 300.

La ventilation à l'intérieur de l'enceinte 20 est réalisée de la manière suivante. De l'air mis en mouvement par le dispositif de soufflerie 300 situé à l'extérieur de l'enceinte 20 est soufflé dans l'ouverture 200. Dans un mode de réalisation particulier, l'air introduit par l'ouverture 200 est canalisé dans l'élément souffleur 30 qui le souffle sur toute la longueur des rainures 31 sur chacun des côtés de l'enceinte 20. En outre, dans le même temps, le dispositif d'entraînement déplace l'élément souffleur 30 transversalement à l'enceinte 20 de façon à balayer la largeur de l'enceinte 20 avec cet air. Les tapis 40 disposés de part et d'autre de l'extrémité 30a de l'élément souffleur 30 se déplacent dans des directions similaires à celle de l'élément souffleur 30 et ainsi maintiennent l'enceinte 20 approximativement hermétique aux conditions atmosphériques présentes à l'extérieur de l'enceinte 20. Le mouvement de l'élément souffleur 30 dans l'enceinte 20 crée des courants de convections à l'origine de la répartition de l'air soufflé à l'intérieur de l'enceinte 20. On remarquera que dans un autre mode de réalisation dans lequel la trajectoire suivie par l'élément souffleur 30 est circulaire, on obtient également une bonne répartition de l'air soufflé. Cette répartition et ce brassage de l'air permettent d'une part, d'éviter la création de zones de surchauffe causant la mort des embryons et, d'autre part, d'obtenir une meilleure oxygénation des oeufs. Ces avantages en amènent d'autres car, ces oeufs étant mieux oxygénés et mieux ventilés, la capacité de chargement de l'enceinte 20 peut être augmentée tout en maintenant des conditions optimales d'incubation. Le rendement est alors meilleur. En outre, le chargement pouvant être effectué en une seule fois, les manipulations et énergies mis en oeuvre sont moindre.

## Revendications

1. Incubateur à oeufs (10) incluant une enceinte (20) comportant d'une part, un air ambiant destiné à être mis en mouvement au moyen d'un dispositif de soufflerie (300) disposé à l'extérieur de ladite enceinte (20) et, d'autre part, au moins un orifice d'entrée d'air aménagé sur un élément souffleur (30), lequel élément souffleur (30) est installé à l'intérieur de ladite enceinte (20) et relié à une sortie dudit dispositif de soufflerie (300), **caractérisé en ce que** ledit élément souffleur (30) est mobile dans ladite enceinte (20).

2. Incubateur (10) selon la revendication 1, **caractérisé en ce que** ledit élément souffleur (30) est mû par un moyen d'entraînement prévu pour lui permettre de réaliser une trajectoire rectiligne entre deux parois parallèles de ladite enceinte (20).

3. Incubateur (10) selon la revendication 2, **caractérisé en ce que** ledit moyen d'entraînement est prévu pour permettre audit dispositif souffleur (30) de réaliser une trajectoire rectiligne médiane entre deux parois parallèles de ladite enceinte (20).

4. Incubateur (10) selon la revendication 2 ou 3, **caractérisé en ce que** ledit moyen d'entraînement est un vérin sans tige.

5. Incubateur (10) selon la revendication 1, **caractérisé en ce que** ledit élément souffleur (30) est mû par un moyen d'entraînement prévu pour lui permettre de réaliser une trajectoire circulaire à l'intérieur de ladite enceinte (20).

6. Incubateur (10) selon l'une des revendications précédentes, **caractérisé en ce que** ledit élément souffleur (30) comprend une poutrelle creuse pourvue de rainures (31) réalisées selon une direction longitudinale dans ladite poutrelle et prévues pour souffler de l'air provenant de la sortie dudit dispositif de soufflerie (300).

7. Incubateur (10) selon la revendication 6, **caractérisé en ce qu'**au moins deux desdites rainures (31) sont disposées dans un même plan.

8. Incubateur (10) selon l'une des revendications précédentes, **caractérisé en ce que** ledit élément souffleur (30) comporte une première extrémité (30a) ouverte par des pans (30a1, 30a2) inclinés et une seconde extrémité (30b) fermée.

9. Incubateur (10) selon la revendication 8, **caractérisé en ce que** ladite première extrémité (30a) dudit élément souffleur (30) est reliée par chacun de ses pans (30a1, 30a2) à un tapis (40) prévu pour clore ladite enceinte (20).

10. Incubateur selon l'une des revendications précédentes, **caractérisé en ce qu'**il comporte en outre un dispositif de traitement de l'air (80) inséré en amont du dispositif de soufflerie (300).

11. Incubateur (10) selon la revendication 10, **caractérisé en ce que** l'enceinte (20) est munie d'au moins un orifice de sortie d'air relié à une entrée du dispositif de traitement de l'air (80).

12. Incubateur (10) selon la revendication 10, **caractérisé en ce que** l'enceinte (20) est munie d'au moins un orifice de sortie d'air relié à une entrée du dispositif de soufflerie (300).

13. Incubateur selon la revendication 10, **caractérisé en ce que** le dispositif de traitement de l'air comporte au moins une entrée d'air ouverte sur l'air extérieur.

## Claims

1. Egg incubator (10) including an enclosure (20) comprising on the one hand ambient air intended to be set in motion by means of a blower apparatus (300) located outside said enclosure (20) and on the other hand at least one air inlet opening provided on a blower element (30), said blower element (30) being installed inside said enclosure (20) and connected to an outlet of said blower apparatus (300), **characterised in that** said blower clement (30) is movable within said enclosure (20).

2. Incubator (10) according to claim 1, **characterised in that** the said blower element (30) is moved by drive means which are provided to enable it to travel along a rectilinear trajectory between two parallel walls of said enclosure (20).

3. Incubator (10) according to claim 2, **characterised in that** the said drive means are provided to enable said blower apparatus (30) to travel along a rectilinear trajectory centrally between two parallel walls of said enclosure (20).

4. Incubator (10) according to claim 2 or 3, **characterised in that** said drive means comprise a rodless cylinder.

5. Incubator (10) according to claim 1, **characterised in that** said blower element (30) is moved by drive means provided to enable it to travel along a circular trajectory within said enclosure (20).

6. Incubator (10) according to one of the preceding claims, **characterised in that** said blower element (30) comprises a hollow beam provided with grooves (31) formed in a longitudinal direction in said beam and designed to blow air coming from the outlet of said blower apparatus (300).

7. Incubator (10) according to claim 6, **characterised in that** at least two of said grooves (31) are arranged in the same plane.

8. Incubator (10) according to one of the preceding claims, **characterised in that** said blower element (30) comprises a first end (30a) which is open via sloping faces (30a1, 30a2) and a second end (30b) which is closed.

9. Incubator (10) according to claim 8, **characterised in that** said first end (30a) of said blower element (30) is connected by each of its faces (30a1, 30a2) to a mat (40) provided for closing off said enclosure (20).

10. Incubator according to one of the preceding claims, **characterised in that** it further comprises an air conditioning apparatus (80) inserted upstream of the blower apparatus (300).

11. Incubator (10) according to claim 10, **characterised in that** the enclosure (20) is provided with at least one air outlet opening connected to an inlet of the air conditioning apparatus (80).

12. Incubator (10) according to claim 10, **characterised in that** the enclosure (20) is provided with at least one air outlet opening connected to an inlet of the blower apparatus (300).

13. Incubator according to claim 10, **characterised in that** the air conditioning apparatus comprises at least one air inlet that is open to the outside air.

## Patentansprüche

1. Eierbrutkasten (10) mit einem Gehäuse (20), das einerseits Umgebungsluft enthält, die mittels einer Gebläsevorrichtung (300) in Bewegung versetzt wird, die außerhalb des Gehäuses (20) angeordnet ist, und andererseits wenigstens eine Lufteintrittsöffnung aufweist, die an einem Einblaselement (30) ausgebildet ist, das innerhalb des Gehäuses (20) angeordnet und mit einem Auslass der Gebläsevorrichtung (300) verbunden ist, **dadurch gekennzeichnet, dass** das Einblaselement (30) im Gehäuse (20) beweglich ist.

2. Brutkasten (10) nach Anspruch 1, **dadurch gekennzeichnet, dass** das Einblaselement (30) mittels einer Antriebseinrichtung bewegt wird, die dazu vorgesehen ist, dass es eine geradlinige Bahn zwischen zwei parallelen Wänden des Gehäuses (2) durchlaufen kann.

3. Brutkasten (10) nach Anspruch 2, **dadurch gekennzeichnet, dass** die Antriebseinrichtung dazu bestimmt ist, es dem Einblaselement (30) zu ermöglichen, eine geradlinige mittlere Bahn zwischen zwei parallelen Wänden des Gehäuses (20) zu durchlaufen.

4. Brutkasten (10) nach Anspruch 2 oder 3, **dadurch gekennzeichnet, dass** die Antriebseinrichtung ein kolbenloser Hubzylinder ist.

5. Brutkasten (10) nach Anspruch 1, **dadurch gekennzeichnet, dass** das Einblaselement (30) mittels einer Antriebseinrichtung bewegt wird, die dazu vorgesehen ist, es ihm zu ermöglichen, eine kreisförmige Bahn innerhalb des Gehäuses (2) zu durchlaufen.

6. Brutkasten (10) nach einem der vorhergehenden Ansprüche, **dadurch gekennzeichnet, dass** das Einblaselement (30) einen Hohlträger aufweist, der mit Nuten (31) versehen ist, die in Längsrichtung des Trägers ausgebildet und dazu bestimmt sind, Luft aus dem Auslass der Gebläsevorrichtung (300) einzublasen.

7. Brutkasten (10) nach Anspruch 6, **dadurch gekennzeichnet, dass** wenigstens zwei der Nuten (31) in einer gleichen Ebene angeordnet sind.

8. Brutkasten (10) nach einem der vorhergehenden Ansprüche, **dadurch gekennzeichnet, dass** das Einblaselement (30) ein erstes Ende (30a), das sich durch schräge Flächen (30a1, 30a2) öffnet, und ein zweites, geschlossenes Ende (30b) aufweist.

9. Brutkasten (10) nach Anspruch 8, **dadurch gekennzeichnet, dass** das erste Ende (30a) des Einblaselements (30) durch seine Flächen (30a1, 30a2) mit einer Abdeckung (40) verbunden ist, die das Gehäuse (20) verschließt.

10. Brutkasten (10) nach einem der vorhergehenden Ansprüche, **dadurch gekennzeichnet, dass** es außerdem eine Luftbehandlungsvorrichtung (80) aufweist, die in Strömungsrichtung oberhalb der Gebläsevorrichtung (300) eingesetzt ist.

11. Brutkasten (10) nach Anspruch 10, **dadurch gekennzeichnet, dass** das Gehäuse (20) mit wenigstens einer Luftauslassöffnung versehen ist, die mit einem Einlass der Luftbehandlungsvorrichtung (80) verbunden ist.

12. Brutkasten (10) nach Anspruch 10, **dadurch gekennzeichnet, dass** das Gehäuse (20) mit wenigstens einer Luftauslassöffnung versehen ist, die mit einem Einlass der Gebläsevorrichtung (300) verbunden ist.

13. Brutkasten nach Anspruch 10, **dadurch gekennzeichnet, dass** die Luftbehandlungsvorrichtung wenigstens einen nach außen offenen Einlass aufweist.
